# EUROPEAN PATENT APPLICATION

(11) **EP 4 850 990 A1**
(43) Date of publication of application: **09.12.2026**
(21) Application number: 25747774.5
(22) Date of filing: 24.01.2025
(51) Int. Cl.: B60R 22/46, B60R 22/34

(54) **SEAT BELT RETRACTOR**

(30) Priority: 02.02.2024 CN 202420267245 U
(71) Applicant: Yanfeng International Automotive Technology Co., Ltd., Shanghai 201306 (CN)
(72) Inventor: ZHANG, Lijun, Shanghai 201306 (CN); GUO, Xin, Shanghai 201306 (CN); LI, Feng, Shanghai 201306 (CN); HUANG, Yongliang, Shanghai 201306 (CN)
(74) Representative: De Bortoli, Eros
(86) International application number: PCT/CN2025/074513
(87) International publication number: WO 2025/162206

(57) **Abstract**

The present disclosure relates to a seat belt retractor, comprising a frame, a spool, and a pretensioning device, wherein the spool is rotatably mounted on the frame, wherein the pretensioning device comprises a drive wheel, a tube, and a plurality of mass bodies, wherein the drive wheel is connected to the spool, wherein the tube is used to accommodate the plurality of mass bodies, and wherein an engagement region is formed between the tube and the drive wheel, characterized in that it further comprises a guiding device, wherein the guiding device comprises a base, a guide rod, and an elastic member, wherein the base is fixed on the frame, wherein the guide rod is slidably connected to the base and is slidable relative to the base between a first position and a second position, wherein the elastic member is connected to the base and the guide rod respectively, for providing an elastic force to the guide rod to cause the guide rod to slide toward the first position; wherein when the guide rod is located at the first position, the guide rod is at least partially located in the engagement region. In the seat belt retractor of the present disclosure, the guiding device can reduce the force required to resynchronize the mass bodies with the drive wheel during secondary engagement, preventing the drive wheel from being jammed.

## Description

### Technical Field

The present disclosure relates to the technical field of vehicle seat belts, and more specifically, to a seat belt retractor.

### Background of Invention

A vehicle seat belt is an important component of a vehicle occupant restraint system, which includes a retractor and a webbing. The webbing is wound around a spool of the retractor to achieve retraction of the webbing. When a traffic accident occurs, the seat belt can provide protection for vehicle occupants, preventing injury to the occupants or minimizing the injury.

Existing seat belt retractors have a pretensioning device and a force-limiting device. When a vehicle collision occurs, the pretensioning device drives a certain number of mass bodies to engage with a drive wheel, causing the drive wheel and the spool connected to the drive wheel to rotate in a winding direction, thereby pretensioning the webbing to effectively fit the occupant's body and improve the protection effect. After the collision, due to inertia, the occupant moves forward, causing an outward pulling force on the webbing. When this force exceeds a predetermined threshold, the force-limiting device causes the spool to rotate in a direction opposite to the winding direction, thereby relaxing the webbing and allowing the webbing to be pulled out, preventing the webbing from applying excessive restraining force to the occupant's body and causing secondary injury to the occupant. After the force limiting function is activated, some mass bodies disengage from the drive wheel but can still re-engage with the drive wheel when the drive wheel rotates in the direction opposite to the winding direction, and are carried back by the drive wheel; this is referred to as "secondary engagement".

Due to the influence of different seat belt wearing operations and manufacturing tolerances, the relative position between the mass bodies and the drive wheel fluctuates, causing the force required for the mass bodies and the drive wheel to synchronize to also fluctuate. When the force is sufficiently large, it may jam the drive wheel, preventing it from continuing to rotate, thereby preventing the webbing from being pulled out, blocking the force limiting function, and causing injury to the occupant.

### Summary of Invention

The object of the present disclosure is to provide a seat belt retractor to reduce the force required to resynchronize the mass bodies with the drive wheel during secondary engagement, preventing the drive wheel from being jammed.

Based on the above object, the present disclosure provides a seat belt retractor, comprising a frame, a spool, and a pretensioning device, wherein the spool is rotatably mounted on the frame, wherein the pretensioning device comprises a drive wheel, a tube, and a plurality of mass bodies, wherein the drive wheel is connected to the spool, wherein the tube is used to accommodate the plurality of mass bodies, and wherein an engagement region is formed between the tube and the drive wheel, characterized in that it further comprises a guiding device, wherein the guiding device comprises a base, a guide rod, and an elastic member, wherein the base is fixed on the frame, wherein the guide rod is slidably connected to the base and is slidable relative to the base between a first position and a second position, wherein the elastic member is connected to the base and the guide rod respectively, for providing an elastic force to the guide rod to cause the guide rod to slide toward the first position; wherein when the guide rod is located at the first position, the guide rod is at least partially located in the engagement region.

In some embodiments, when the mass bodies drive the drive wheel to rotate in a first direction, the guide rod can reach or be located at the second position, so that the mass bodies enter a storage channel after disengaging from the drive wheel; wherein when the drive wheel changes from rotating in the first direction to rotating in a second direction opposite to the first direction, the guide rod can reach or be located at the first position to push the mass bodies, especially the mass bodies in the engagement region, to re-engage with the drive wheel, or to block the mass bodies, especially the mass bodies in the storage channel, from re-engaging with the drive wheel. In the present disclosure, "can reach or be located at" means that the guide rod can substantially reach or be located at the first position or the second position accordingly. When the guide rod is located at the second position, the mass bodies substantially push the guide rod open to the maximum extent.

In some embodiments, a sliding groove is provided on the base, wherein the guide rod is at least partially located in the sliding groove and is slidable in the sliding groove; and wherein the elastic member is located in the sliding groove.

In some embodiments, two ends of the elastic member respectively contact the guide rod and the base and are in a compressed state.

In some embodiments, the base is formed by a first part and a second part that are detachably assembled to each other.

In some embodiments, the guide rod comprises a rod head and a rod body, wherein the rod body is located in the sliding groove and is slidable in the sliding groove, and wherein the rod head is located outside the sliding groove.

In some embodiments, a first limiting structure is provided on the rod body, wherein a second limiting structure is provided on the base, and wherein the first limiting structure and the second limiting structure limit each other to define the first position.

In some embodiments, a third limiting structure is provided on the rod head, wherein a fourth limiting structure is provided on the base, and wherein the third limiting structure and the fourth limiting structure limit each other to define the second position. Herein, "define the second position" is understood as limiting the extreme of the second position. In practice, the second position may exhibit various degrees of variation. The third limiting structure and the fourth limiting structure can work together to limit the extreme limit of the second position.

In some embodiments, the sliding groove extends in an arc shape, and the sliding groove is parallel to the circumferential direction of the drive wheel.

In some embodiments, the guide rod comprises a first side wall, a bottom wall, and a second side wall, wherein the first side wall and the bottom wall are smoothly connected, wherein the bottom wall slopes downward, wherein the bottom wall is used to push the mass bodies contacting the bottom wall back into the engagement region to re-engage with the drive wheel when the drive wheel rotates in a second direction, wherein the second side wall is used to block the mass bodies disengaged from the drive wheel from re-entering the engagement region to re-engage with the drive wheel.

In the seat belt retractor of the present disclosure, when the mass bodies cause the drive wheel to rotate in the first direction, the guide rod can move from the first position to the second position, and the guide rod guides the mass bodies disengaged from the drive wheel to enter the storage channel. When the drive wheel rotates in the second direction, the guide rod returns to the first position under the action of the elastic force, which can push the mass bodies contacting its bottom wall to move backward and engage with the drive wheel, reducing the force required to synchronize and engage the mass bodies with the drive wheel, preventing the drive wheel from being jammed. Meanwhile, the guide rod can block the mass bodies in the storage channel from re-entering the engagement region, reducing the probability of secondary engagement.

### Brief Description of Drawings

Fig. 1 is a schematic structural diagram of a seat belt retractor according to an embodiment of the present disclosure;
Fig. 2 is a side cross-sectional view of the seat belt retractor according to an embodiment of the present disclosure, at a time when the pretensioning device has not been activated;
Fig. 3 is a side cross-sectional view of the seat belt retractor according to an embodiment of the present disclosure, at a time when the pretensioning device has been activated, and the mass bodies engage with the drive wheel and cause it to rotate in the first direction;
Fig. 4 is a side cross-sectional view of the seat belt retractor according to an embodiment of the present disclosure, at a time when the drive wheel rotates in the second direction under the pulling force of the webbing;
Fig. 5 is an exploded view of the guiding device according to an embodiment of the present disclosure;
Fig. 6 is a half cross-sectional view of Fig. 5;
Fig. 7 is a schematic structural diagram of the guiding device along the A-A section direction according to an embodiment of the present disclosure;
Fig. 8 is a cross-sectional view along the A-A line of Fig. 7.

### Detailed Description of Drawings

Some embodiments of the present disclosure will be given and described in detail below in conjunction with the accompanying drawings.

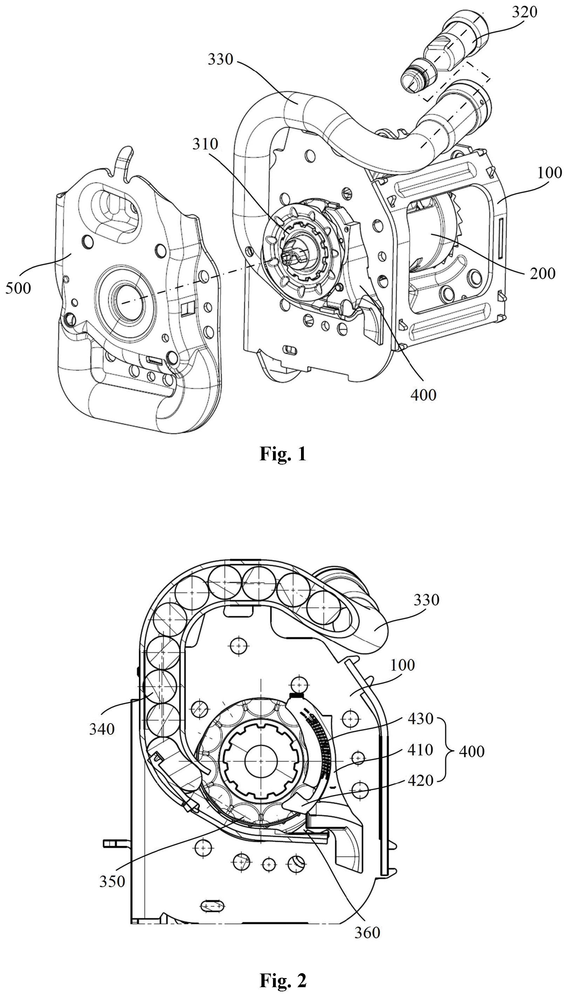

As shown in Fig. 1 and Fig. 2, an embodiment of the present disclosure provides a seat belt retractor, comprising a frame 100, a spool 200, and a pretensioning device. The spool 200 is rotatably mounted on the frame 100 and can rotate relative to the frame 100 around its own axial direction. A webbing (not shown in the drawings) is wound around the spool 200. When the spool 200 rotates in the first direction (i.e., the winding direction), the webbing can be tightened and wound onto the spool 200. When the spool 200 rotates in the second direction (i.e., the direction opposite to the winding direction), the webbing can be relaxed, thereby being pulled out from the spool 200. The spool 200 is usually provided with a coil spring (not shown in the drawings) for providing a pretensioning force that causes the spool 200 to rotate in the winding direction. The pretensioning device comprises a drive wheel 310, a triggering mechanism 320, a tube 330, and a plurality of mass bodies 340 (e.g., spheres made of materials such as metal or plastic). The drive wheel 310 is connected to the spool 200 and can rotate synchronously with the spool 200. The tube 330 is used to accommodate the plurality of mass bodies 340. When the pretensioning device is not operating, the mass bodies 340 remain stationary in the tube 330. When a vehicle collision occurs, the triggering mechanism 320 will be triggered and drive at least a portion of the mass bodies 340 to move along the tube 330, causing them to enter an engagement region 350 to engage with the drive wheel 310, so as to cause the drive wheel 310 to rotate in the first direction. Meanwhile, the drive wheel 310 drives the spool 200 to rotate in the first direction together, thereby achieving pretensioning of the webbing. As the drive wheel 310 rotates in the first direction, the mass bodies 340 will disengage from the drive wheel 310 and enter a storage channel 360. Since there are multiple mass bodies 340, the plurality of mass bodies 340 will sequentially engage with the drive wheel 310 and then disengage, so as to cause the drive wheel 310 to rotate continuously. After the collision occurs, due to inertia, the occupant will move forward, thereby causing an outward pulling force on the webbing. This force will cause the spool 200 and the drive wheel 310 to rotate in the second direction, i.e., this force will counteract the pretensioning force of the pretensioning device, slowing down the tightening of the webbing. When this force exceeds the pretensioning force of the pretensioning device, the drive wheel 310 will rotate in the second direction, and the webbing will no longer be tightened, but will be pulled out. Since in actual use, affected by different seat belt wearing operations, the angular position of the drive wheel 310 fluctuates randomly each time the pretensioning is activated. Meanwhile, affected by manufacturing tolerances, its pretensioning stroke also fluctuates randomly. In other words, after the pretensioning function is activated, the rotation angles of the spool 200 and the drive wheel 310 fluctuate, which makes the positions of the mass bodies 340 and the drive wheel 310 also fluctuate when secondary engagement occurs. If a certain mass body 340 that has disengaged from the drive wheel 310 happens to contact the tip portion (e.g., the tooth tip) of the drive wheel 310 when the drive wheel 310 rotates in the reverse direction (i.e., in the second direction), it may cause the drive wheel 310 to be jammed and unable to continue to rotate in the second direction. In this way, the webbing will not be able to continue to be pulled out. When the force between the webbing and the occupant is too large, the occupant will be injured by the webbing.

In order to solve the above problems, the seat belt retractor in the embodiment of the present disclosure further comprises a guiding device 400, which is fixed on the frame 100 and is used to push the mass bodies 340 that have disengaged from the drive wheel 310 to re-engage with the drive wheel 310 when the drive wheel 310 rotates in the second direction, reducing the force required for the mass bodies 340 and the drive wheel 310 to re-engage, or blocking the mass bodies 340 from re-engaging with the drive wheel 310, reducing the probability of secondary engagement; thereby preventing the drive wheel 310 from being jammed.

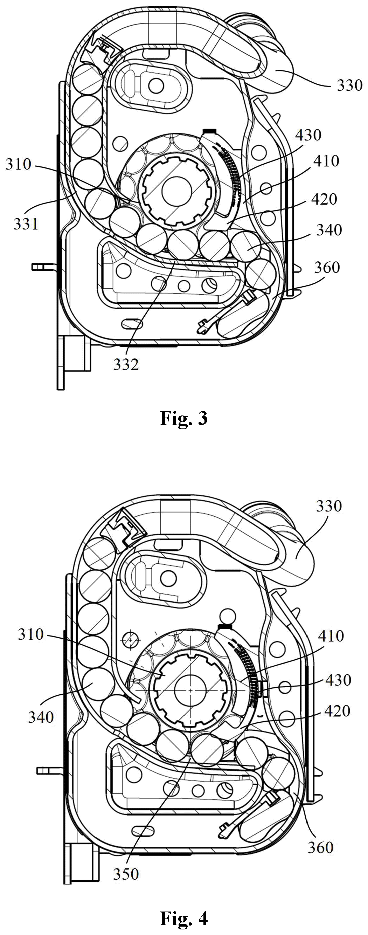

As shown in Fig. 3 and Fig. 4, the guiding device 400 comprises a base 410, a guide rod 420, and an elastic member 430. The base 410 is fixed on the frame 100. The guide rod 420 is slidably connected to the base 410 and is slidable relative to the base 410 between a first position and a second position. The elastic member 430 is connected to the base 410 and the guide rod 420 respectively, for providing an elastic force to the guide rod 420 to cause the guide rod 420 to slide toward the first position, so that the guide rod 420 is maintained at the first position when not subjected to external force. As shown in Fig. 2, when no vehicle collision occurs, the pretensioning device is not activated, and each mass body 340 remains stationary in the tube 330. The guide rod 420 is maintained at the first position under the action of the elastic force. At this time, the guide rod 420 is at least partially located in the engagement region 350 and is within the rotational radius of the drive wheel 310. When a vehicle collision occurs, as shown in Fig. 3, the mass bodies 340 will be pushed into the engagement region 350 under the action of the triggering mechanism 320 to engage with the drive wheel 310, causing the drive wheel 310 to rotate in the first direction to achieve pretensioning of the webbing. Since the guide rod 420 is initially located in the engagement region 350, the mass bodies 340 will push the guide rod 420 to slide toward the second position and maintain it at the second position during the pretensioning process. When the pulling force of the webbing is greater than the pretensioning force of the pretensioning device, the drive wheel 310 will rotate in the second direction. As shown in Fig. 4, at this time, the guide rod 420 is no longer subjected to the pushing force of the mass bodies 340. Therefore, under the action of the elastic force, the guide rod 420 will slide toward the first position and eventually be maintained at the first position. During the process of the guide rod 420 sliding toward the first position, it can push the mass bodies 340 to move backward, thereby prompting the mass bodies 340 in the engagement region 350 to re-engage with the drive wheel 310, reducing the force required for synchronization between the two, and preventing the drive wheel 310 from being jammed. When the guide rod 420 is maintained at the first position, the guide rod 420 can isolate the engagement region 350 and the storage channel 360 to block the mass bodies 340 in the storage channel 360 from returning to the engagement region 350 to engage with the drive wheel 310 for a second time, preventing the drive wheel 310 from being jammed.

In some embodiments, the elastic member 430 may be a spring, an elastic sheet, or any other suitable elastic element.

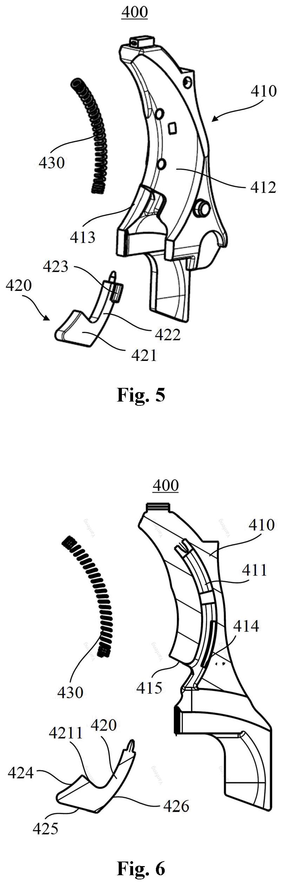

As shown in Fig. 5 and Fig. 6, a sliding groove 411 is provided on the base 410. The guide rod 420 can be at least partially inserted into the sliding groove 411 and slide in the sliding groove 411. The elastic member 430 is located in the sliding groove 411 and is in a compressed state (two ends of the elastic member 430 respectively abut against the guide rod 420 and the top wall of the sliding groove of the base 410), thereby providing an elastic force to the guide rod 420 to cause it to slide toward the first position.

In some embodiments, the sliding groove 411 has a constraining effect on the guide rod 420 in all directions except the circumferential movement direction, thereby effectively preventing the guiding function from failing due to tilting of the guide rod during movement.

In some embodiments, the base 410 may be formed by a first part 412 and a second part 413 that are detachably assembled to each other. Grooves are provided on both the first part 412 and the second part 413. After the two grooves are assembled to each other, the sliding groove 411 is formed, which makes the base 410 easier to disassemble and assemble.

In some embodiments, the guide rod 420 may comprise a rod head 421 and a rod body 422. The rod body 422 is inserted into the sliding groove 411 and can slide in the sliding groove 411. The rod head 421 is located outside the sliding groove 411. When the guide rod 420 is located at the first position, the rod head 421 is located in the engagement region 350.

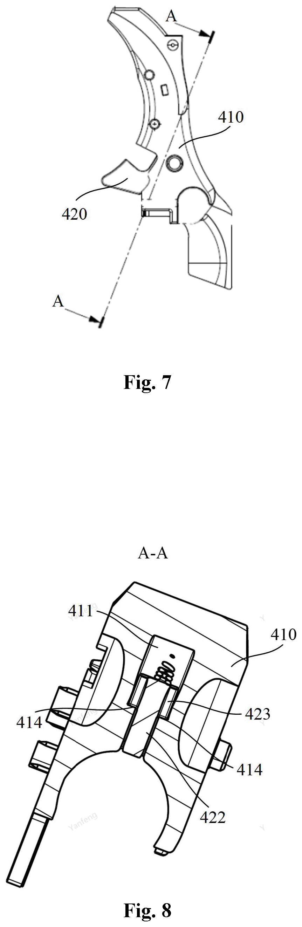

As shown in Fig. 5, Fig. 6, and Fig. 8, in some embodiments, a first limiting structure 423 may be provided on the rod body 422, and a second limiting structure 414 may be provided on the base 410. When the guide rod 420 slides to the first position, the first limiting structure 423 and the second limiting structure 414 limit each other, thereby restricting the guide rod 420 at the first position so that it no longer slides. For example, the first limiting structure 423 may be a protrusion at the end of the rod body 422, and the second limiting structure 414 may be a step in the sliding groove 411. At the first position, the protrusion and the step abut against each other, thereby restricting further sliding of the guide rod 420.

In some embodiments, a third limiting structure 4211 is provided on the rod head 421, and a fourth limiting structure 415 is provided on the base 410. The third limiting structure 4211 and the fourth limiting structure 415 limit each other, thereby restricting the guide rod 420 at the second position. For example, the third limiting structure 4211 may be the top wall of the rod head 421, and the fourth limiting structure 415 may be a limiting wall on the base 410. When the guide rod 420 slides from the first position to the second position, the top wall of the rod head 421 abuts against the limiting wall of the base 410 to prevent the guide rod 420 from sliding further, thereby causing the guide rod 420 to stop at the second position.

In some embodiments, the sliding direction of the guide rod 420 may be parallel to the circumferential direction of the drive wheel 310, so that the sliding path of the guide rod 420 is an arc. Specifically, the sliding groove 411 may extend in an arc shape and the sliding groove 411 may be parallel to the circumferential direction of the drive wheel 310, thereby making the sliding direction of the guide rod 420 parallel to the circumferential direction of the drive wheel 310.

As shown in Fig. 6, in some embodiments, the guide rod 420 comprises a first side wall 424, a bottom wall 425, and a second side wall 426. The first side wall 424 and the bottom wall 425 are smoothly connected. The bottom wall 425 slopes downward. After the pretensioning is activated, the mass bodies 340 contact the smooth connection portion between the first side wall 424 and the bottom wall 425 of the guide rod 420, and push the guide rod 420 to slide toward the second position. Then, the mass bodies 340 move along the bottom wall 425 and enter the storage channel 360. When the pulling force on the webbing gradually increases, the guide rod 420 will slide back from the second position to the first position. At this time, the mass bodies 340 contacting the bottom wall 425 will be pushed back by the guide rod 420 into the engagement region 350 to re-engage with the drive wheel 310, reducing the force required for them to re-engage with the drive wheel 310, and preventing the drive wheel 310 from being jammed. After the guide rod 420 is maintained at the first position, the second side wall 426 serves as a blocking surface, which can block the mass bodies 340 in the storage channel 360 from returning to the engagement region 350.

As shown in Fig. 1, in some embodiments, the seat belt retractor further comprises a cover plate 500. The cover plate 500 is fixedly connected to the frame 100 and covers the pretensioning device to provide protection. The storage channel 360 may be jointly defined by the cover plate 500 and the frame 100.

In some embodiments, the triggering mechanism may be located at the end of the tube 330, and it comprises a gas generator and a piston. When a vehicle collision occurs or is about to occur, the collision signal can be identified through a sensor, and then a trigger signal is generated based on the collision signal for triggering the gas generator to detonate. The high-pressure gas generated by the detonation acts on the mass bodies 340 in the tube 330 through the piston, causing the mass bodies 340 to sequentially enter the engagement region 350 to engage with the drive wheel 310, thereby achieving pretensioning.

In some embodiments, the tube 330 may comprise a tube body 331 and an extension portion 332. The tube body 331 is a closed tube, and the extension portion 332 is a semi-closed tube. The extension portion 332 is located below the drive wheel 310, and the engagement region 350 is formed between the extension portion 332 and the drive wheel 310. A detachable blocking member (not shown in the drawings) may be installed at the outlet of the tube body 331. When the triggering mechanism 320 is not triggered, each mass body 340 is stored in the tube body 331, and the blocking member blocks the mass bodies 340 from entering the engagement region 350. After the triggering mechanism 320 is triggered, it pushes the mass bodies 340 to break through the hindrance of the blocking member and sequentially enter the engagement region 350 to engage with the drive wheel 310.

In some embodiments, the drive wheel 310 may be a gear having a plurality of teeth, with a tooth groove formed between any two adjacent teeth. The mass bodies 340 can be accommodated in the tooth grooves to achieve engagement with the drive wheel 310.

In the seat belt retractor of the embodiment of the present disclosure, the guide rod 420 of the guiding device 400 can slide between the first position and the second position. When the mass bodies 340 cause the drive wheel 310 to rotate in the first direction, the guide rod 420 can move from the first position to the second position, and the guide rod 420 guides the mass bodies 340 disengaged from the drive wheel 310 to enter the storage channel 360. When the drive wheel 310 rotates in the second direction, the guide rod 420 returns to the first position under the action of the elastic force, which can push the mass bodies 340 contacting its bottom wall 425 to move backward and engage with the drive wheel 310, reducing the force required for the mass bodies 340 and the drive wheel 310 to synchronize and engage, preventing the drive wheel 310 from being jammed. Meanwhile, the guide rod 420 can block the mass bodies 340 in the storage channel 360 from re-entering the engagement region, reducing the probability of secondary engagement.

It should be noted that the present disclosure (e.g., the concept of the disclosure, etc.) has been described and/or illustrated in the specification of this patent document based on exemplary embodiments; the embodiments of the present disclosure are presented by way of example only and are not intended to limit the scope of the present disclosure. The structures and/or arrangements of elements embodying the disclosed concepts in the present disclosure as described in the specification and/or illustrated in the drawings are illustrative only. Although the exemplary embodiments of the present disclosure have been described in detail in this patent document, those of ordinary skill in the art will readily appreciate that equivalents, modifications, variations, etc. of the subject matter of the exemplary and alternative embodiments are possible and are considered to be within the scope of the present disclosure; all such subject matters (e.g., modifications, variations, embodiments, combinations, equivalents, etc.) are intended to be included within the scope of the present disclosure. It should also be noted that various/other modifications, variations, substitutions, equivalents, changes, omissions, etc. can be made in the configuration and/or arrangement of the exemplary embodiments (e.g., in terms of concepts, designs, structures, devices, forms, assemblies, constructions, means, functions, systems, processes/methods, sequences of process/method steps, operations, operating conditions, performance, materials, compositions, combinations, etc.) without departing from the scope of the present disclosure; all such subject matters (e.g., modifications, variations, embodiments, combinations, equivalents, etc.) are intended to be included within the scope of the present disclosure. The scope of the present disclosure is not intended to be limited to the subject matter (such as details, structures, functions, materials, acts, steps, sequences, systems, results, etc.) described in the specification and/or illustrated in the drawings of this patent document. Considering that the claims of this patent document will be appropriately construed to encompass the full scope of the subject matter of the present disclosure (e.g., including any and all such modifications, variations, embodiments, combinations, equivalents, etc.); it should be understood that the terms used in this patent document are intended to provide a description of the subject matter of the exemplary embodiments and are not intended to limit the scope of the present disclosure.

It should also be noted that, according to the exemplary embodiments, the present disclosure may include conventional techniques (e.g., techniques implemented and/or integrated in the exemplary embodiments, modifications, variations, combinations, equivalents), or may include any other applicable techniques (present and/or future) having the ability to perform the functions and processes/operations described in the specification and/or illustrated in the drawings. All such techniques (e.g., techniques implemented in the form of embodiments, modifications, variations, combinations, equivalents, etc.) are considered to be within the scope of the present disclosure in this patent document.

## Claims

1. A seat belt retractor, comprising a frame, a spool, and a pretensioning device, wherein the spool is rotatably mounted on the frame, wherein the pretensioning device comprises a drive wheel, a tube, and a plurality of mass bodies, wherein the drive wheel is connected to the spool, wherein the tube is used to accommodate the plurality of mass bodies, and wherein an engagement region is formed between the tube and the drive wheel, **characterized in that** it further comprises a guiding device, wherein the guiding device comprises a base, a guide rod, and an elastic member, wherein the base is fixed on the frame, wherein the guide rod is slidably connected to the base and is slidable relative to the base between a first position and a second position, wherein the elastic member is connected to the base and the guide rod respectively, for providing an elastic force to the guide rod to cause the guide rod to slide toward the first position; wherein when the guide rod is located at the first position, the guide rod is at least partially located in the engagement region.

2. The seat belt retractor according to claim 1, **characterized in that** when the mass bodies drive the drive wheel to rotate in a first direction, the guide rod can reach the second position, so that the mass bodies enter a storage channel after disengaging from the drive wheel; wherein when the drive wheel changes from rotating in the first direction to rotating in a second direction opposite to the first direction, the guide rod can reach the first position to push the mass bodies to re-engage with the drive wheel or to block the mass bodies from re-engaging with the drive wheel.

3. The seat belt retractor according to claim 1, **characterized in that** a sliding groove is provided on the base, wherein the guide rod is at least partially located in the sliding groove and is slidable in the sliding groove; and wherein the elastic member is located in the sliding groove.

4. The seat belt retractor according to claim 3, **characterized in that** two ends of the elastic member respectively contact the guide rod and the base and are in a compressed state.

5. The seat belt retractor according to claim 1, **characterized in that** the base is formed by a first part and a second part that are detachably assembled to each other.

6. The seat belt retractor according to claim 3, **characterized in that** the guide rod comprises a rod head and a rod body, wherein the rod body is located in the sliding groove and is slidable in the sliding groove, and wherein the rod head is located outside the sliding groove.

7. The seat belt retractor according to claim 6, **characterized in that** a first limiting structure is provided on the rod body, wherein a second limiting structure is provided on the base, and wherein the first limiting structure and the second limiting structure limit each other to define the first position.

8. The seat belt retractor according to claim 6, **characterized in that** a third limiting structure is provided on the rod head, wherein a fourth limiting structure is provided on the base, and wherein the third limiting structure and the fourth limiting structure limit each other to define the second position.

9. The seat belt retractor according to claim 3, **characterized in that** the sliding groove extends in an arc shape, and the sliding groove is parallel to the circumferential direction of the drive wheel.

10. The seat belt retractor according to claim 1, **characterized in that** the guide rod comprises a first side wall, a bottom wall, and a second side wall, wherein the first side wall and the bottom wall are smoothly connected, wherein the bottom wall slopes downward, wherein the bottom wall is used to push the mass bodies contacting the bottom wall back into the engagement region to re-engage with the drive wheel when the drive wheel rotates in a second direction, wherein the second side wall is used to block the mass bodies disengaged from the drive wheel from re-entering the engagement region to re-engage with the drive wheel.
